(19) Europäisches Patentamt
European Patent Office
Office européen des brevets

(11) EP 2 182 021 B1

(12) **EUROPEAN PATENT SPECIFICATION**

(45) Date of publication and mention of the grant of the patent:
**09.10.2013 Bulletin 2013/41**

(21) Application number: **08827601.9**

(22) Date of filing: **20.08.2008**

(51) Int Cl.:
***C08J 5/18*** *(2006.01)* ***C08G 18/48*** *(2006.01)*
***C08G 18/10*** *(2006.01)*

(86) International application number:
**PCT/JP2008/064846**

(87) International publication number:
**WO 2009/025305 (26.02.2009 Gazette 2009/09)**

# (54) THERMOPLASTIC POLYURETHANE TAPE

THERMOPLASTISCHES POLYURETHANBAND

RUBAN DE POLYURÉTHANE THERMOPLASTIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.08.2007 JP 2007215050**

(43) Date of publication of application:
**05.05.2010 Bulletin 2010/18**

(73) Proprietor: **Asahi Kasei Fibers Corporation**
**Osaka-shi, Osaka 530-8205 (JP)**

(72) Inventors:
- **YOSHIDA, Satoru**
**Tokyo 101-8101 (JP)**
- **KOJIMA, Junichi**
**Tokyo 101-8101 (JP)**

(74) Representative: **von Kreisler Selting Werner**
**Deichmannhaus am Dom**
**Bahnhofsvorplatz 1**
**50667 Köln (DE)**

(56) References cited:
**JP-A- 01 284 518**
**JP-A- 02 049 022**
**JP-A- 2004 189 931**
**JP-A- 2007 521 415**
**US-A- 4 787 948**

- **DATABASE WPI Week 200582 Thomson Scientific, London, GB; AN 2005-801594 XP000002657623, & JP 2005 316081 A (CANON KK) 10 November 2005 (2005-11-10)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 182 021 B1

## Description

TECHNICAL FIELD

The present invention relates to a thermoplastic polyurethane tape having a good elastic function.

BACKGROUND ART

A polyurethane tape has excellent stretchability, for example, has a strength equal to rubber despite being thinner and lighter than rubber, and has high wear resistance, and is excellent in weather resistance and oil resistance compared with rubber. Therefore, a polyurethane tape is widely used for inner garments, outer garments, sports garments, garment materials.

However, more improvements are being demanded for various elastic functions. For example, when a polyurethane tape is used for a fastening part at the end of underwear, undergarments, sportswear, such as swimwear and leotards, T- shirts, polo shirts or when used as a reinforcement of cloth for the purpose of suppressing droop at the shoulder part of a cut/sew garment in place of a cotton or braided tape, there is a problem that due to poor recoverability during repeated wearing, the clothing fabric remains uneven after disrobing, i.e., it is demanded to improve the elastic recoverability as an elastic function at room temperature. In use as a reinforcing tape of cold- weather garment such as outdoor wear, reduction in the elastic function at low temperatures is a problem.

A polyether is often used as the soft segment component of a polyurethane resin. Above all, a polyurethane resin using polytetramethylene ether glycol (hereinafter simply referred to as PTMG) which is a polymer of tetrahydrofuran (hereinafter simply referred to as THF) is excellent in the elastic property, low-temperature property, hydrolysis resistance and the like and therefore, is being used in various fields. However, a tape obtained from the polyurethane resin using PTMG is reduced in the elastic functions resulting from crystallization of the soft segment at the stretching.

For the purpose of improving these elastic functions, various efforts have been made with an attempt to suppress the crystallinity of the soft segment in the polyurethane by using various diols, but there are no publications that describe a polyurethane that has succeeded in enhancing the above-described elastic functions to a sufficiently satisfactory level.

For example, there are four publications describing use of a copolymerization- type polyether polyol as the soft segment of the polyurethane. Patent Document 1 describes a polyether glycol in which 4.2 mol% of a neopentyl glycol group is copolymerized, and Patent Document 2 describes a polyurethane using a 3.4 mol% copolymerized polyether glycol, but these polymers have a low copolymerization ratio and a polyurethane remarkably enhanced in the mechanical property when formed into a tape or film shape, such as strength, elongation and elastic recovery percentage, is not disclosed. Furthermore, Patent Document 3 describes a polyurethane using a copolymerized polyol of THF and 3- alkyl tetrahydrofuran but is silent about the stretch and recoverability in expansion and contraction, and Patent Document 4 describes improvement of elastic functions of a copolymerized polyurethane containing from 8 to 85 mol% of neopentyl glycol group and/or 3- methyl- 1, 5- pentanediol; however, a thermoplastic polyurethane is not disclosed.

Patent Document 5 discloses thermoplastic (melt- spun) elastic polyurethane tapes for clothing applications. The thermoplastic polyurethane (TPU) is prepared from mixtures of PTMEG's, MDI and a glycol chain extender and is formed with or without crosslinker via melt extrusion and spinnerets into TPU tapes with excellent elastic properties.

Patent Document 6 discloses polyurethane elastic fibers with excellent elasticity and extension recovery suitable for textiles, being prepared from a polyurethane based on 4, 4'- MDI, a diamine and a polyalkylene ether diol having a number average molecular weight of 300 to 30, 000 and containing structural units derived from tetrahydrofuran and neopentyl glycol.

[Patent Document 1] Japanese Unexamined Patent Publication (Kokai) No. 61-120830
[Patent Document 2] U.S. Patent No. 4,658,065
[Patent Document 3] Kokai No. 5-239177
[Patent Document 4] Kokai No. 2-49022
[Patent Document 5] US-A-2005/0025966
[Patent Document 6] JP- A- 2004- 189931

DISCLOSURE OF THE INVENTION

Problems to be Solved by the Invention

An object of the present invention is to provide a thermoplastic polyurethane tape causing none of those problems in conventional techniques and having, as excellent elastic functions, (1) small residual strain at the stretching

and recovery, (2) good recoverability in repeated stretching and recovery at low temperatures, and (3) stretch power high enough as a reinforcing tape.

Means to Solve the Problems

As a result of intensive studies, the present inventors have accomplished the present invention.
In particular, the present invention relates to a thermoplastic polyurethane tape comprising a thermoplastic polyurethane containing structures obtained from compounds of (i) and (ii) below:

(i) an organic polyisocyanate compound, and
(ii) a polyalkylene ether diol with a molecular weight of 300 to 30, 000, comprising structural units represented by the following structural formulae (A) and (B) and having a composition satisfying the following formula (1) :

$$-(CH_2\text{-}\ CH_2\text{-}\ CH_2\text{-}\ CH_2\text{-}\ O)- \qquad (A)$$

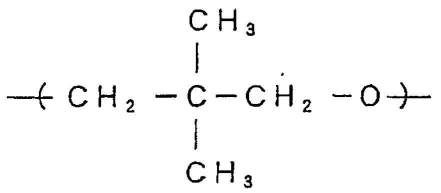

(B)

$$0.08 \leq M_B/(M_A+M_B) \leq 0.45 \qquad (1)$$

wherein MA and $M_B$ are molar numbers of structural units (A) and (B) present in the polyalkylene ether diol.

Wherein the residual strain after 300 % stretching at 20 °C is from 5 to 40 %, wherein the residual strain is measured by using a tensile tester wherein a tape having a width of 0.6 cm and a length of 5 cm was stretched at a rate of 50 cm/min followed by recovering.
Preferred embodiments are apparent from the dependent claims.

Effects of the Invention

According to the present invention, a thermoplastic polyurethane tape having, as excellent elastic functions, (1) small residual strain at stretching and recovery, (2) good recoverability in repeated stretching and recovery at low temperatures, and (3) sufficient stretch power can be obtained, and a cut/sew garment or underwear free of droop even after repeated wearing can be obtained by using the tape as a reinforcement. Use in a fastening part at the end of outdoor wear employed at low temperatures, which has been conventionally impossible, is enabled.

BRIEF DESCRIPTION OF THE DRAWINGS

Fig. 1 is an example of the S-S curve drawn when the thermoplastic polyurethane tape of the present invention is stretched and then recovered.

BEST MODE FOR CARRYING OUT THE INVENTION

The present invention is specifically described below.
The present invention relates to a tape comprising a thermoplastic polyurethane. The term "thermoplastic" as used herein means to have a reversible property of becoming flowable under heating at a temperature not more than the decomposition temperature and being solidified upon cooling. Generally, a polyurethane resin starts decomposing at 230°C or more.
The thermoplastic polyurethane tape of the present invention is characterized in that the residual strain after

300% stretching at 20°C is 40% or less. If the residual strain exceeds 40%, the clothing fabric stretched at wearing is not recovered and looks ugly due to uneven droop remaining on the surface. The residual strain is more preferably 30% or less, still more preferably 25% or less. The lower limit is preferably as small as possible, but in view of production or cost, is about 5%.

In the thermoplastic polyurethane tape of the present invention, the recovery percentage after repeating a 300% stretching/recovery cycle at -10°C three times is preferably 85% or more. If the recovery percentage is less than 85%, when the tape is used for fastening at the end of outdoor wear, weak fastening disadvantageously results due to bad recovery of the clothing fabric. The recovery percentage is more preferably 90% or more. The upper limit is preferably as large as possible, but in view of production or cost, is about 99%.

In the thermoplastic polyurethane tape of the present invention, in addition to the above-described stretching and recovery performance, the stress at an elongation of 100%, that is indicative of the power at stretching, is preferably from 3.0 to 6.0 MPa. If the stress is less than 3.0 MPa, when the tape is used as a fastening material at the end of a garment or as a reinforcement of clothing fabric, the fastening performance or reinforcing performance is poor, whereas if the stress exceeds 6.0 MPa, the fastening force becomes too strong and the tape is sometimes unsuited for use in practice. The stress is more preferably from 3.2 to 5.8 MPa, still more preferably from 3.5 to 5.5 MPa.

In the case where the thus-obtained polyurethane tape is used as a reinforcement of clothing fabric, the tape is in many cases heat adherent to the fabric by using a hot press or the like. In order to keep the power as a reinforcement even after heat adhesion, the thermoplastic polyurethane tape of the present invention preferably has an MFR (melt flow rate) of 15 to 25, more preferably from 17 to 24, still more preferably from 18 to 23. If the MFR is less than 15, the heat adherent force is insufficient, whereas if it exceeds 25, the power is lacking. The MFR is indicative of flowability (shear viscosity) under given conditions and can be measured by a melt indexer described later. When MFR is in the range above, excellent elastic functions can be suitably brought out.

In the present invention, as described above, a polyurethane containing a structure obtained by reacting (i) an organic polyisocyanate compound and (ii) a polyalkylene ether diol may be used. Furthermore, (iii) an active hydrogen-containing compound that reacts with an isocyanate group may be used as a chain extender.

The polyalkylene ether diol (ii) for use in the present invention preferably comprises structural units represented by structural formula (A) and structural formulae (B) and has a composition satisfying formula (1), i.e., contains from 8 to 45 mol% of a segment having a methyl group in the side chain. When the segment having a methyl group in the side chain accounts for from 8 to 45 mol%, a thermoplastic polyurethane tape excellent in various elastic functions, for example, elongation at break and elastic recoverability, can be suitably obtained. The composition is more preferably in a range represented by the following formula (2):

$$0.09 \leq M_B/(M_A+M_B) \leq 0.30 \qquad (2)$$

This specific polyalkylene ether diol is produced by reacting THF and neopentyl glycol or its dehydrated cyclic low- molecular compound, for example, 3, 3- dimethyloxetane, according to the method described in Japanese Unexamined Patent Publication No. 61- 123628 while using a heteropolyacid with a controlled hydration number as a catalyst. The copolymerized diol can be easily produced by variously changing the method and conditions of reaction to give predetermined molecular weight, copolymerization component constitution and copolymerization ratio.

Incidentally, the neopentyl glycol unit constituting the diol may be distributed in either random or block manner with respect to the tetramethylene unit. In the reaction using a heteropolyacid catalyst, the units can be distributed in either block or random manner, and the crystallinity of the diol can be changed variously, so that a diol having desired crystallinity can be produced according the property of the polyurethane.

The number average molecular weight of the polyalkylene ether diol for use in the present invention is from 300 to 30,000, more preferably from 500 to 5,000, still more preferably from 900 to 2,000. If the number average molecular weight is less than 300, the tape decreases in the elongation and cannot be stretched at wearing, whereas if the number average molecular weight exceeds 30,000, the strength of the tape decreases and this is a problem.

The polyalkylene ether diol for use in the present invention may be used as a mixture or in combination, in an arbitrary ratio, with other diols having a number average molecular weight of approximately from 250 to 20, 000, for example, with a homopolyether diol such as polyoxyethylene glycol, polyoxypropylene glycol, polyoxytetramethylene glycol and polyoxypentamethylene glycol, a copolymerized polyether diol formed from two or more oxyalkylenes each having a carbon number of 2 to 6, a polyester diol obtained from one species or two or more species of a dibasic acid such as adipic acid, sebacic acid, maleic acid, itaconic acid, azelaic acid and malonic acid, and one species or two or more species of a glycol such as ethylene glycol, 1, 2- propylene glycol, 1, 3- propylene glycol, 2, 2- dimethyl- 1, 3- propanediol, 1, 4- butanediol, 1, 3- butanediol, hexamethylene glycol, diethylene glycol, 1, 10- decanediol, 1, 3- dimethylolcyclohexane and 1, 4- dimethylolcyclohexane, a polyesteramide diol, a polyester ether diol, a polylactone diol such

as poly- ε- caprolactone diol and polyvalerolactone diol, a polycarbonate diol, a polyacryl diol, a polythioether diol, a polythioester diol, or a copolymerized product of such diols.

Examples of the organic polyisocyanate compound (i) include a compound having at least two or more isocyanate groups within the molecule, such as 4, 4'- diphenylmethane diisocyanate, methylene- bis (4- phenyl isocyanate), methylene- bis (3- methyl- 4- phenyl isocyanate), 2, 4- tolylene diisocyanate, 2, 6- tolylene diisocyanate, m- or p- xylylene diisocyanate, α, α, α', α'- tetramethyl- xylylene diisocyanate, m- or p- phenylene diisocyanate, 4, 4'- dimethyl- 1, 3- xylylene diisocyanate, 1- alkylphenylene- 2, 4- or 2, 6- diisocyanate, 3- (α- isocyanatoethyl) phenyl isocyanate, 2, 6- diethylphenylene- 1, 4- diisocyanate, diphenyl- dimethylmethane- 4, 4- diisocyanate, diphenylether- 4, 4'- diisocyanate, naphthylene- 1, 5- diisocyanate, 1, 6- hexamethylene diisocyanate, methylene- bis (4- cyclohexyl isocyanate), 1, 3- or 1, 4- cyclohexylene diisocyanate, trimethylene diisocyanate, tetramethylene diisocyanate, pentamethylene diisocyanate, hexamethylene diisocyanate and isophorone diisocyanate.

Examples of the active hydrogen- containing compound (iii) that reacts with an isocyanate group include: (a) a low molecular weight glycol such as ethylene glycol, 1, 2- propylene glycol, 1, 3- propylene glycol, 2, 2- dimethyl- 1, 3- propanediol, 1, 4- butanediol, 1, 3- butanediol, hexamethylene glycol, diethylene glycol, 1, 10- decanediol, 1, 3- dimethylolcyclohexane and 1, 4- dimethylolcyclohexane hydrazine; (b) a compound having a linear or branched, aliphatic, alicyclic or aromatic, active hydrogen- containing amino group having a carbon number of 2 to 10, such as ethylenediamine, 1, 2- propylenediamine, trimethylenediamine, hexamethylenediamine, hydrazine, carbodihydrazide, adipic acid dihydrazide and sebacic acid dihydrazide; (c) a monofunctional amino compound such as secondary amine, that is, dimethylamine, methylethylamine, diethylamine, methyl- n- propylamine, methyl- isopropylamine, diisopropylamine, methyl- n- butylamine, methyl- isobutylamine and methylisoamylamine; (d) water; (e) a polyalkylene ether diol defined in (ii) above; (f) known diols having a number average molecular weight of approximately from 250 to 5, 000; and (g) monohydric alcohols. Diols are preferred, and 1, 4- butanediol and/or a dialkylene glycol having a carbon number of 4 to 8 are more preferred.

The organic polyisocyanate and active hydrogen-containing compound for use in the present invention each may be used alone, or some may be previously mixed, if desired, and then used.

As for the operation of polyurethanation reaction, known techniques for polyurethanation reaction are used. For example, the polyalkylene ether diol (ii) and the organic polyisocyanate compound (i) may be reacted in a ratio of preferably from 1:1.5 to 1:3.5, more preferably from 1:1.8 to 1:3.0, still more preferably from 1:1.9 to 1:2.7 (equivalent ratio), under the conditions of an excess organic polyisocyanate compound to synthesize a urethane prepolymer, and the active hydrogen-containing compound (iii) that reacts with an isocyanate group may be added and reacted with the isocyanate group in the prepolymer. Alternatively, the organic polyisocyanate compound (i), the polyalkylene ether diol (ii) and the active hydrogen-containing compound (iii) that reacts with an isocyanate group may be reacted by a one-shot polymerization method of simultaneously reacting these in one step. These are reacted such that the isocyanate group of the organic polyisocyanate compound becomes nearly equivalent to the total of the hydroxyl group of the polyalkylene ether diol and the active hydrogen of the active hydrogen-containing compound that reacts with an isocyanate.

The polymer obtained by the chain extension reaction may be adjusted to a viscosity suitable for melt extrusion by performing a heat treatment (annealing) at a temperature of approximately from 80 to 180°C.

In the reaction above, a catalyst, a stabilizer and the like may be added, if desired. Examples of the catalyst include triethylamine, tributylamine, dibutyltin dilaurate and stannous octylate, and examples of the stabilizer include other compounds usually used in the polyurethane resin, such as ultraviolet absorbent, antioxidant, light stabilizer, gas-resistant stabilizer, antistatic agent, colorant, matting agent and filler.

The thus-obtained polyurethane can be formed into a tape by a known thermoplastic polyurethane extrusion molding. In the extrusion molding, for example, the film may be extruded directly in a tape shape by using a slit die or the film may be once extruded in a wide sheet shape by using a T-die and then cut into a tape shape having a predetermined width.

In extrusion molding into a tape shape, the polyurethane may be cold drawn or hot drawn. The polyurethane after spinning may be directly drawn or may be once taken up and then drawn in a separate step. The draw ratio is preferably from 2 to 8 times, more preferably from 3 to 7 times.

The thickness of the tape is usually on the order of 0.02 to 0.5 mm.

EXAMPLES

The present invention is specifically described below. Although the present invention is described in greater detail by referring to Examples, the present invention is not limited only to these Examples. The measured values in Examples are a value determined by the following measuring methods.

Measurement of Residual Strain and Recovery Percentage:

Using a tensile tester (UTM-III Model 100, trade name, manufactured by ORIENTEC Co., LTD.), a tape having a width of 0.6 cm and a length of 5 cm was stretched at a rate of 50 cm/min under the conditions of 20°C and -10°C and then recovered, and the change in the stress-strain was measured.
Fig. 1 shows S-S curves at the first and third stretching/recovery operations. L1 is a maximum elongation (300%) when stretched, and L2 is an elongation when the stress of the S-S curve at the first operation becomes 0. L3 denotes an elongation when the stress in the S-S curve at the third operation becomes 0.
The residual stain is indicated by the elongation of L2 shown in Fig. 1.
The recovery percentage after repeating 300% stretching and recovery three time is represented by the following formula (3):

$$[(L1-L3)/(L1+100)]\times100 \qquad (3)$$

Measurement of MFR (JIS K 7210 (1995):

Using a melt indexer, Model S-101, manufactured by Toyo Seiki Seisaku-Sho, Ltd., the measurement was performed at 190°C under a load of 2.16 kg.

Measurement of Stress at Elongation of 100%:

Using a tensile tester (UTM-III Model 100, trade name, manufactured by ORIENTEC Co., LTD.), a tape having a width of 0.6 cm and a length of 5 cm was stretched at a rate of 50 cm/min at 20°C, and the stress-stain was measured. The value obtained by dividing the measured value at an elongation of 100% by the cross-sectional area of the tape is taken as the stress.

(Example 1)

As the polyalkylene ether diol (ii), PTXG1800 produced by Asahi Kasei Fibers Corp. was used. The copolymerization composition $M_B/(M_A+M_B)$ of PTXG1800 was 0.1. In a nitrogen gas stream, 1,400 g of this PTXG and 389.4 g of 4,4'-diphenylmethane diisocyanate were reacted under stirring at 80°C for 180 minutes to obtain a polyurethane prepolymer having an isocyanate group at both terminals. This prepolymer was then rapidly cooled to 25°C, and 35 g of 1,4-butanediol was added to the prepolymer and stirred for 30 minutes. A polyurethane having a viscosity of 117,000 mPa·s (25°C) was obtained.
The polyurethane obtained was mixed with 9 g of AO-60 produced by Adeka Corp. as an antioxidant and 9 g of LA-36 produced by Adeka Corp. as a yellowing inhibitor and then discharged to a Teflon (registered trademark) tray. The polyurethane in the Teflon (registered trademark) tray was annealed in a hot air oven at 130°C for 3 hours to obtain a polyurethane resin. This polyurethane resin had a Shore A hardness of 71, an MFR of 5.0 and a thermoplastic property.
The polyurethane resin obtained above was ground into a powder having a diameter of about 3 mm by a grinder, Model UG-280, manufactured by Horai K.K.
This polyurethane resin powder was melt-extruded into a shaped form by a twin-screw extruder, KZW15TW-45HG, manufactured by TECHNOVEL Corp. The melt was extruded into a film shape at a discharge rate of 12.4 g/min from a T-die with a width of 150 mm and a lip width of 1.0 mm at a die temperature of 200°C. The film was taken up by a metal roll cooled to 15°C, at a roll speed of 0.5 m/min to obtain a film having a thickness of 250 μm.
This film was subjected to slitting to obtain a tape of 6 mm in width. The MFR of this tape was 1.8.
The residual strain of this tape after 300% stretching at 20°C was 24% and good. Also, the recovery percentage after repeating 300% stretching/recovery at -10°C three times was 92% and good.
The stress of this tape at an elongation of 100% was 3.1 MPa.

(Example 2)

The polyurethane resin powder obtained in Example 1 was melt-extruded into a shaped form by a twin-screw extruder, KZW15TW-45HG, manufactured by TECHNOVEL Corp. The melt was extruded into a film shape at a discharge rate of 12.4 g/min from a T-die with a width of 150 mm and a lip width of 1.0 mm at a die temperature of 200°C. The film was taken up by a metal roll cooled to 15°C, at a roll speed of 0.5 m/min to obtain a film having a thickness of 250 μm. This film was subjected to slitting to obtain a tape of 6 mm in width. The obtained tape was fixed to a expanding instrument

in a state of being cold drawn at ratio of four, and heat-treated in a hot air oven at 70°C for 30 minutes.
The residual strain of this tape after 300% stretching at 20°C was 18% and good. The stress of this tape at an elongation of 100% was 4.02 MPa.

(Comparative Example 1)

A polyether-based thermoplastic polyurethane, E380 (Shore A hardness: 80, MI: 8.3), produced by Nippon Miractran Co., Ltd., mainly comprising a structural unit represented by structural formula (A) and not containing a structural unit represented by structural formula (B), was extrusion molded into a film shape from a T-die under the same conditions as in Example 1. A film having a thickness of 250 μm was obtained.
This film was subjected to slitting to obtain a tape of 6 mm in width.
The residual strain of this tape after 300% stretching at 20°C was 58% and the recoverability was poor. Also, the recovery percentage after repeating 300% stretching/recovery at -10°C three times was 80%.

(Comparative Example 2)

A polyether-based thermoplastic polyurethane, E385 (Shore A hardness: 85, MI: 6.6), produced by Nippon Miractran Co., Ltd., mainly comprising a structural unit represented by structural formula (A) and not containing a structural unit represented by structural formula (B), was extrusion molded into a film shape from a T-die under the same conditions as in Example 1. A film having a thickness of 250 μm was obtained.
This film was subjected to slitting to obtain a tape of 6 mm in width.
The residual strain of this tape after 300% stretching at 20°C was 61% and the recoverability was poor. Also, the recovery percentage after repeating 300% stretching/recovery at -10°C three times was 67%.

(Example 3)

The polyurethane resin powder produced in Example 1 was melt-extruded into a shaped form by a 50 mmϕ single-screw extruder. The melt was extruded into a ribbon shape at a discharge rate of 80 g/min from a slit die with a width of 30 mm and a thickness of 0.2 mm at a die temperature of 200°C, and the ribbon was wound on a metal roll cooled to 15°C and taken up at a roll speed of 30 m/min and a winder speed of 120 m/min. A tape having a thickness of 110 μm was obtained.
The residual strain of this tape after 300% stretching at 20°C was 25% and good. Also, the recovery percentage after repeating 300% stretching/recovery at -10°C three times was 90% and good.

(Example 4)

A cut/sew garment having inserted into the shoulder part thereof the polyurethane tape obtained in Example 1 was produced. The garment was worn and washed every day, and this was repeated for 1 week, but droop of the shoulder part was not generated and the state was good.

INDUSTRIAL APPLICABILITY

The thermoplastic polyurethane tape of the present invention is excellent in the elastic recovery function and therefore, by using this polyurethane tape, a garment or the like excellent in the appearance quality without generation of droop after wearing can be suitably obtained.

## Claims

**1.** A thermoplastic polyurethane tape comprising a thermoplastic polyurethane containing structures obtained from compounds of (i) and (ii) below:

(i) an organic polyisocyanate compound, and
(ii) a polyalkylene ether diol with a number average molecular weight of 300 to 30, 000, comprising structural units represented by the following structural formulae (A) and (B) and having a composition satisfying the following formula (1) :

$$\left( CH_2\text{-}\ CH_2\text{-}\ CH_2\text{-}\ CH_2\text{-}\ O \right) \qquad (A)$$

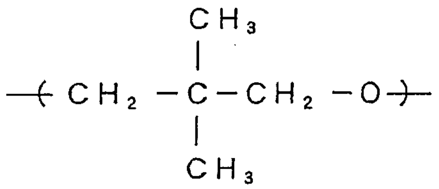

(B)

$$0.08 \leq M_B/(M_A+M_B) \leq 0.45 \qquad (1)$$

wherein $M_A$ and $M_B$ are molar numbers of structural units (A) and (B) present in the polyalkylene ether diol. Wherein the residual strain after 300 % stretching at 20 °C is from 5 to 40 %, wherein the residual strain is measured by using a tensile tester wherein a tape having a width of 0.6 cm and a length of 5 cm was stretched at a rate of 50 cm/min followed by recovering.

**2.** The thermoplastic polyurethane tape according to claim 1, wherein the thermoplastic polyurethane further contains a structure obtained from a chain extender comprising an active hydrogen-containing compound that reacts with an isocyanate group

**3.** The thermoplastic polyurethane tape according to claim 2, wherein the active hydrogen-containing compound that reacts with an isocyanate group is a diol.

**4.** The thermoplastic polyurethane tape according to any one of claims 1 to 3, wherein the equivalent ratio ((ii):(i)) of the polyalkylene ether diol (ii) to the organic polyisocyanate compound (i) is from 1:1.5 to 1:3.5.

**Patentansprüche**

**1.** Thermoplastisches Polyurethanband, umfassend ein thermoplastisches Polyurethan, das Strukturen enthält, die ausgehend von den folgenden Verbindungen (i) und (ii) erhalten werden:

(i) einer organischen Polyisocyanatverbindung; und
(ii) einem Polyalkylenetherdiol mit einem Zahlenmittel des Molekulargewichts von 300 bis 30 000, das Struktureinheiten, die durch die folgenden Strukturformeln (A) und (B) dargestellt werden, umfasst und eine Zusammensetzung aufweist, die der folgenden Formel (1) genügt:

$$\{CH_2\text{-}CH_2\text{-}CH_2\text{-}CH_2\text{-}O\} \qquad (A)$$

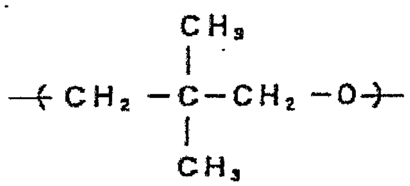

(B)

$$0.08 \leq M_B/(M_A+M_B) \leq 0.45 \qquad (1)$$

wobei $M_A$ und $M_B$ Stoffmengen der in dem Polyalkylenetherdiol vorhandenen Struktureinheiten (A) und (B) sind, wobei die Restspannung nach 300% Dehnung bei 20 °C 5 bis 40% beträgt, wobei die Restspannung unter Verwendung einer Zugprüfmaschine gemessen wird, wobei ein Band mit einer Breite von 0, 6 cm und einer Länge von 5 cm mit einer Geschwindigkeit von 50 cm/min gedehnt und anschließend sich rückformen gelassen wurde.

**2.** Thermoplastisches Polyurethanband gemäß Anspruch 1, wobei das thermoplastische Polyurethan weiterhin eine Struktur enthält, die ausgehend von einem Kettenverlängerer erhalten wurde, der eine aktiven Wasserstoff enthaltende Verbindung umfasst, die mit einer Isocyanatgruppe reagiert.

**3.** Thermoplastisches Polyurethanband gemäß Anspruch 2, wobei die aktiven Wasserstoff enthaltende Verbindung, die mit einer Isocyanatgruppe reagiert, ein Diol ist.

**4.** Thermoplastisches Polyurethanband gemäß einem der Ansprüche 1 bis 3, wobei das Äquivalentverhältnis ((ii):(i)) des Polyalkylenetherdiols (ii) zu der organischen Polyisocyanatverbindung (i) 1:1,5 bis 1:3,5 beträgt.

## Revendications

**1.** Ruban en polyuréthane thermoplastique comprenant un polyuréthane thermoplastique contenant des structures obtenues à partir des composés (i) et (ii) ci- dessous :

(i) un composé polyisocyanate organique, et
(ii) un polyalkylène- éther- diol ayant une masse moléculaire moyenne en nombre de 300 à 30 000, comprenant des motifs structurels représentés par les formules structurelles (A) et (B) suivantes et ayant une composition satisfaisant à la formule (1) suivante :

$$-(CH_2\text{- }CH_2\text{- }CH_2\text{- }CH_2\text{- }O)- \qquad (A) .$$

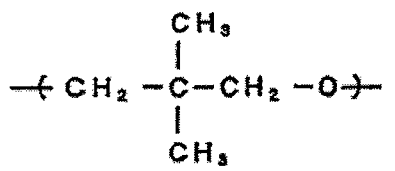

(B)

$$0,08 \leq M_B/(M_A+M_B) \leq 0,45 \qquad (1)$$

où $M_A$ et $M_B$ sont les nombres molaires des motifs structurels (A) et (B) présents dans le polyalkylène- éther- diol, dans lequel la déformation résiduelle après étirement à 300 % à 20°C est de 5 à 40 %, la déformation résiduelle étant mesurée par utilisation d'un testeur en traction dans lequel un ruban ayant une largeur de 0, 6 cm et une longueur de 5 cm a été étiré à une vitesse de 50 cm/min, opération suivie d'une récupération.

**2.** Ruban en polyuréthane thermoplastique selon la revendication 1, dans lequel le polyuréthane thermoplastique contient en outre une structure obtenue à partir d'un agent d'allongement de chaîne comprenant un composé contenant de l'hydrogène actif qui réagit avec un groupe isocyanate.

**3.** Ruban en polyuréthane thermoplastique selon la revendication 2, dans lequel le composé contenant de l'hydrogène

actif qui réagit avec un groupe isocyanate est un diol.

4. Ruban en polyuréthane thermoplastique selon l'une quelconque des revendications 1 à 3, dans lequel le rapport équivalent ((ii)/(i)) du polyalkylène-éther-diol (ii) au composé polyisocyanate organique (i) est de 1/1,5 à 1/3,5.

Fig.1

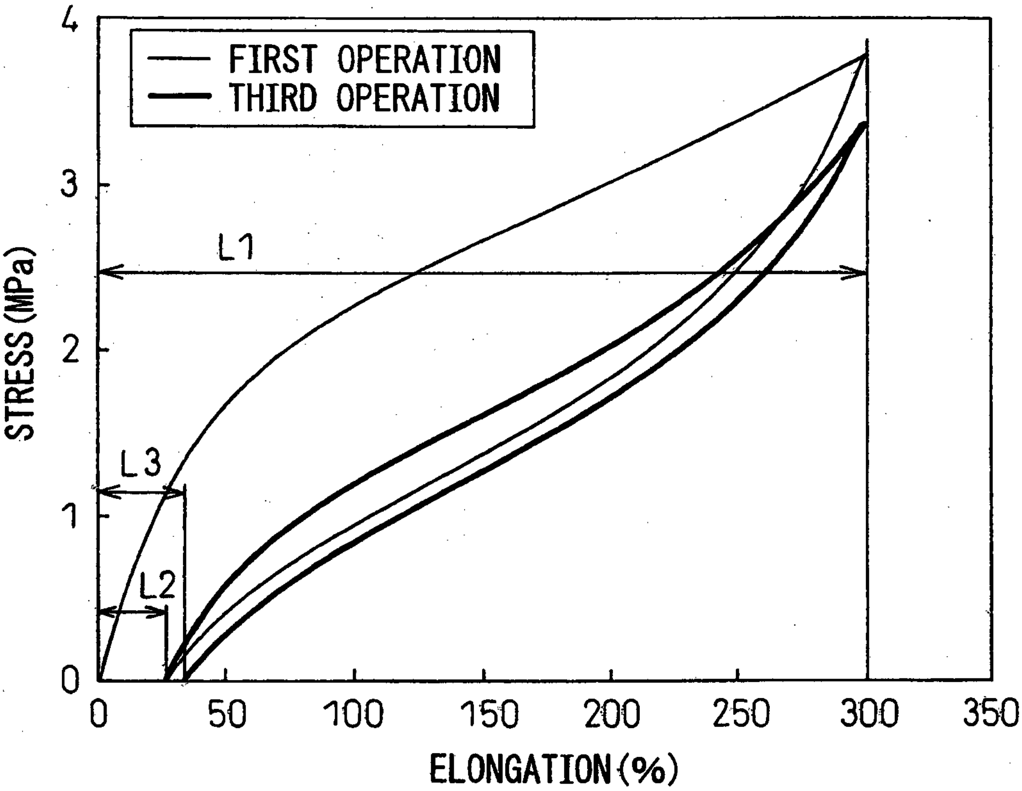
FIRST OPERATION
THIRD OPERATION
L1
L2
L3
STRESS (MPa)
ELONGATION (%)
0
1
2
3
4
0
50
100
150
200
250
300
350

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61120830 A
- US 4658065 A
- JP 5239177 A
- JP 2049022 A
- US 20050025966 A
- JP 2004189931 A
- JP 61123628 A